# EUROPEAN PATENT SPECIFICATION

(11) **EP 3 321 030 B1**
(45) Date of publication and mention of the grant of the patent: **02.10.2019**
(21) Application number: 17001832.9
(22) Date of filing: 09.11.2017
(51) Int. Cl.: B23Q 3/155

(54) **TOOL CHANGER DEVICE**
WERKZEUGWECHSLERVORRICHTUNG
DISPOSITIF DE CHANGEMENT D'OUTIL

(30) Priority: 11.11.2016 IT 201600114326
(43) Date of publication of application: 16.05.2018
(73) Proprietor: CFT Rizzardi S.r.l., 10040 Rivalta di Torino (TO) (IT)
(72) Inventor: RIZZARDI, Renzo, 10040 Rivalta di Torino (TO) (IT)
(74) Representative: Aprà, Mario

(56) References cited:
- JP-A- S5 766 834
- JP-U- S50 114 076
- US-A- 4 833 772

## Description

The present invention relates to a tool changer device.

A similar tool changer is known from patent document US 4,833,772.

In particular, the present invention relates to a mechanical and fully autonomous tool changer device, that by means of a cam mechanism, transforms uniform rotary input movement, provided by a gear motor unit, into an ordered series of intermittent linear and rotary movements of an output shaft, on which is mounted an arm carrying a tool gripper. The synchronous combination of movements made by the gripper arm performs a typical tool changing cycle.

The gripper rotation angle for gripping and releasing the tool is 90°, for example. The tipping rotation angle is 180°.

The standard movements for the extraction and insertion of tools vary according to the type of tool-holder cone and may be, for example, exemplified as follows:
- standby position;
- gripping of tool-holder: rotation of arm thru +90° from the standby position;
- extraction of tool-holder from brackets: linear output movement;
- changing the position of the tools: rotation of arm thru +180°;
- insertion of the exchanged tool-holders in the brackets: linear return movement;
- release of tool holders: rotation of arm thru -90°.

There is an increasing need to have, on the same machine tool and on the same spindle, tools with two different types of tool-holder cone: for example, the tool-holder cone HSK63E and tool-holder cone HSK80F. These tool-holder cones have the particular feature of having the same cone diameter (48 mm), but different flange diameters: a diameter of 63 mm for HSK63E and a diameter of 80 mm for HSK80E. Both cones do not have an external key on the flange.

The need to use these two types of cone is due to the different dimensions of the cone supporting surface. The supporting surface for cone HSK80 guarantees greater tool stiffness compared to cone HSK63, meaning that it can be used with very long tools such as boring bars and reamers.

As far as the tool changer device is concerned, it must be capable of manipulating and exchanging "at random" and indifferently the two types of tool holder cone, without any pre-selection.

The present invention proposes to solve the afore-mentioned problem.

The object of the present invention is to provide a tool changer device that is capable of manipulating and exchanging "at random" and indifferently at least two types of tool-holder cones, of different diameters (wherein the difference in diameters falls within a pre-determined size range), without any pre-selection.

Another object of the present invention is to provide a tool changer device as described, which is structurally simple, safe and reliable to operate, easily maintained and with a relatively modest cost.

In view of these objects, the present invention provides a tool changer device, the essential characteristic of which is the subject of the main claim, while further advantageous characteristics of the invention are described in the dependent claims.

The present invention will become more apparent from the following detailed description, with reference to the drawing attached hereto, which is purely exemplary and therefore non-limiting, in which:

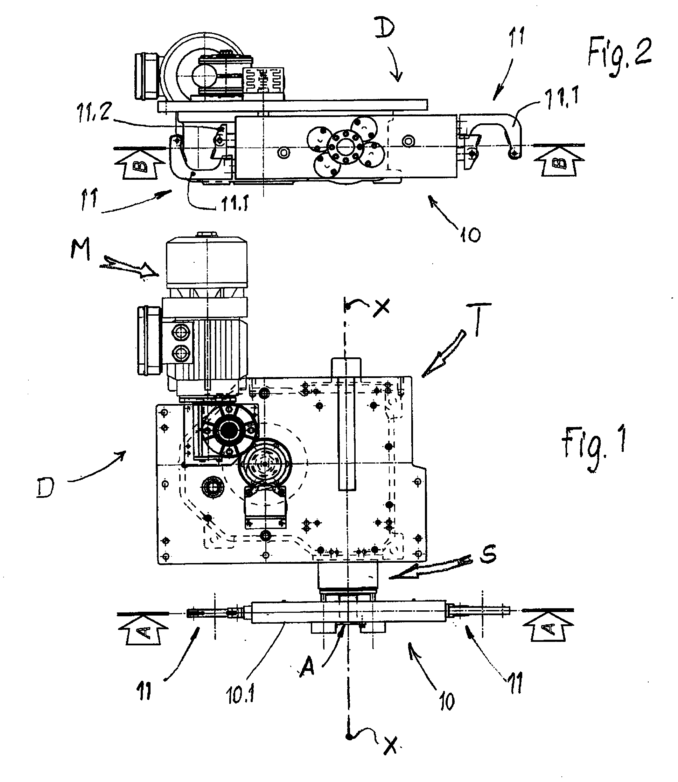

- Fig. 1 shows an overhead plan view of the tool changer device according to an embodiment of the present invention;
- Fig. 2 shows an elevation view of the device illustrated in Fig. 1;

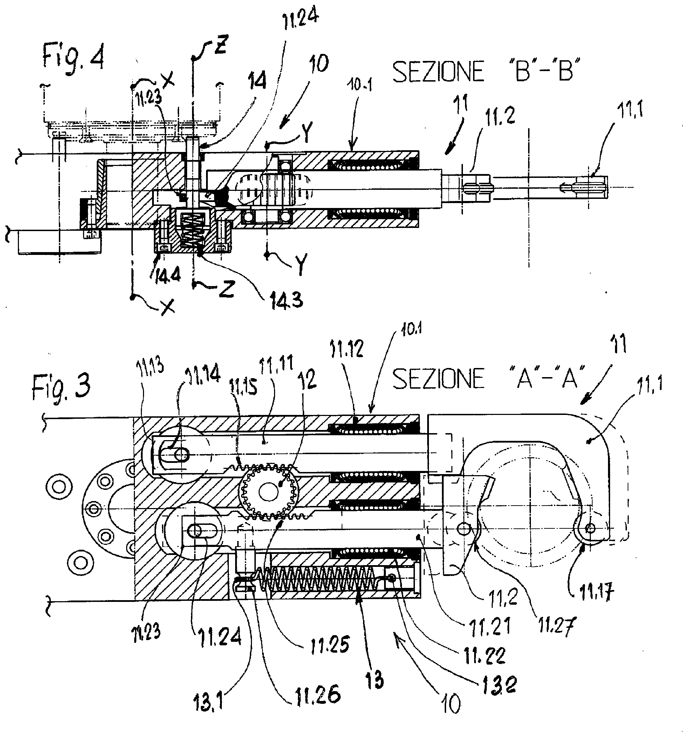

- Fig. 3 shows a partial cross-section view in a larger scale along the line A-A shown in Fig. 1;
- Fig. 4 shows a partial cross-section view in a larger scale along the line B-B shown in Fig. 2;
- Fig. 5 shows a detailed schematic view, enlarged and with parts removed, showing a perspective view of a gripper mounted on a gripper-holder arm (not shown) of the device illustrated in Fig. 1;
- Figs. 6 shows a detailed cross-section view in a larger scale of a gripper-holder arm illustrated in Fig. 4 (but turned thru 180° with respect to said figure), wherein a shutter is shown in the standby position;
- Fig. 7 shows a similar view to that of Fig. 6, but wherein said shutter is shown in the working position;
- Figures 8 to 11 show a schematic view, in operational sequence, of the movements of the two jaws during tool gripping by the gripper-holder arm of the device shown in Fig. 1, in relation to a pair of HSK63E type tool-holder cones;
- Figures 12 to 15 show a schematic view, in operational sequence, of the movements of the two jaws during tool gripping by the gripper-holder arm of the device shown in Fig. 1, in relation to a pair of HSK80E type tool-holder cones.

In the drawing, the letter D indicates the tool changer device as a whole, according to an example of an embodiment of the invention.

Said tool changer device D comprises a stationary head T, wherein is provided a cam exchanger mechanism S (of an already known type and therefore no longer shown hereinafter), that transforms uniform rotary input movement, provided by a gear motor unit M, into an ordered series of intermittent linear and rotary movements of an output shaft A, on which is mounted an arm 10 carrying a pair of tool grippers 11. The reference letters X-X indicate the axis of said shaft A, with respect to which said grippers 11 are supported on the arm 10 in diametrically opposing positions.

Each gripper 11 comprises an outer jaw 11.1 and an inner jaw 11.2, with reference to the axis X-X. Said jaws 11.1, 11.2 can move with respect to one another with a straight-line movement.

An elongated box-type body 10.1 of said arm 10, symmetrically extended with respect to said axis X-X, supports on the outside, at a respective distal end from the shaft X-X, said jaws 11.1, 11.2 means of respective cylindrical rods 11.11, 11.21, housed by axial sliding inside respective recirculating ball bearings 11.12, 11.22, fixed onto said box-type body 10.1. The axes of said rods 11.11, 11.21 and the relative bearings are parallel to one another and lie on a plane at right angles to said axis X-X. Said bearings 11.12, 11.22 are fixed in the box-type body 10.1 in a distal position with respect to the axis X-X of the shaft A.

Moreover, each of said rods 11.11, 11.12 has a respective free axial end 11.13, 11.23, near said axis X-X of the shaft A, wherein there is provided a respective slot-type through hole 11.14, 11.24, the axes of which lie along a plane at right angles to said axis X-X, the long axis being parallel to the axis of the respective rod and to the direction of sliding of the rod.

Furthermore, on opposing sides of their lateral surfaces, said rods 11.11, 11.21, have a respective rack 11.15, 11.25, which extends along a plane at right angles to said axis X-X and is engaged with a corresponding pinion 12 with an axis Y-Y parallel to said axis X-X.

Moreover, the cylindrical rod 11.21 supports a fixed radial pin 11.26, near said slot-type hole 11.24 and opposite said rack 11.25. A helical spring 13 is engaged at one end 13.1 with said pin 11.26, while with the other end 13.2 said spring 13 is fixed to the box-type body 10.1, in a distal position with respect to the axis X-X of the shaft A.

With this arrangement, said spring 13 normally and directly acts on the rod 11.21 of the inner jaw 11.2 causing said jaw to close, approaching the outer jaw 11.1, which in turn is indirectly acted on by said spring 13, by means of its rod 11.11, the rack 11.15, the pinion 12 and the other rack 11.25, and caused to close and approach the inner jaw 11.2.

Said jaws 11.1, 11.2 at their respective free ends, have respective idle contact rollers, 11.17, 11.27.

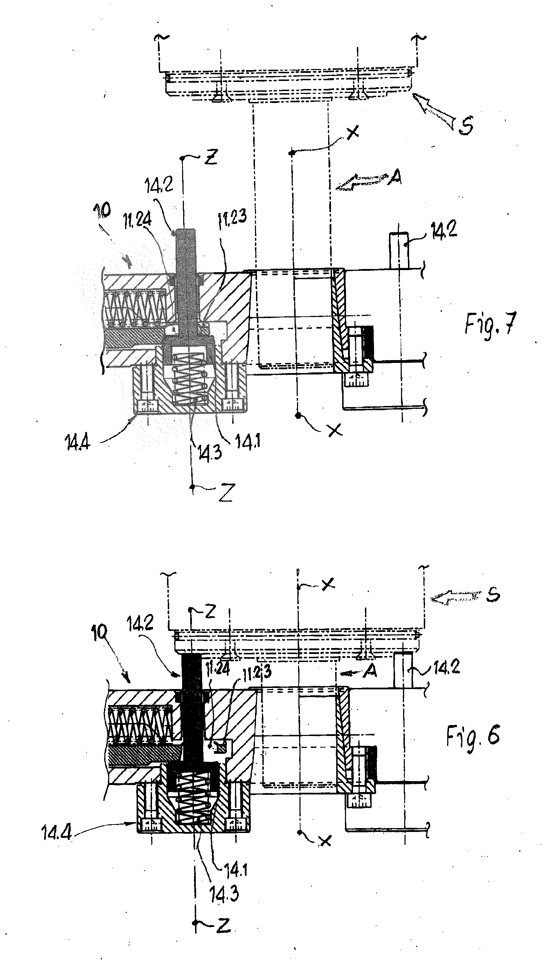

At each slot-type hole 11.14, 11.24 there is provided a respective movable shutter 14, which comprises a cylindrical rod 14.2, with an axis Z-Z parallel to said axis X-X and positioned passing through the corresponding slot-type hole, and a coaxial cup-type body 14.1, projecting beyond said slot-type hole in a distal position with respect to said head T with the cam exchanger S. Furthermore, said rod 14.2 of each shutter 14 partly protrudes outside the box-type body 10.1, through a corresponding hole provided on a side face of said body 10.1 near the head T. A helical spring 14.3 is elastically compressed between said cup-type body 14.1 and a cover 14.4 fixed in a side face of said box-type body 10.1 distal from said head T. The elastic pre-loading of said spring 14.3 normally maintains said rod 14.2 of the shutter 14 partially extended beyond the box-type body 10.1 and in contact with an opposing surface of said head T with the cam exchanger S (Fig. 6). In this condition, the rod 14.2 of the shutter 14 passes through the corresponding slot-type hole 11.14, 11.24 without interference. Therefore, the rod 11.11 of the outer jaw 11.1 and the rod 11.21 of the inner jaw 11.2 are free to make respective linear movements of a length substantially equal to the longer axis of said slot-type holes 11.14, 11.24. Said length of travel of the rods 11.11 and 11.12 corresponds at least to the linear difference measured between the diameters of the flanges of two tool-holder cones with flanges of different diameters, which are exchanged "at random" and indifferently by means of the device according to the invention.

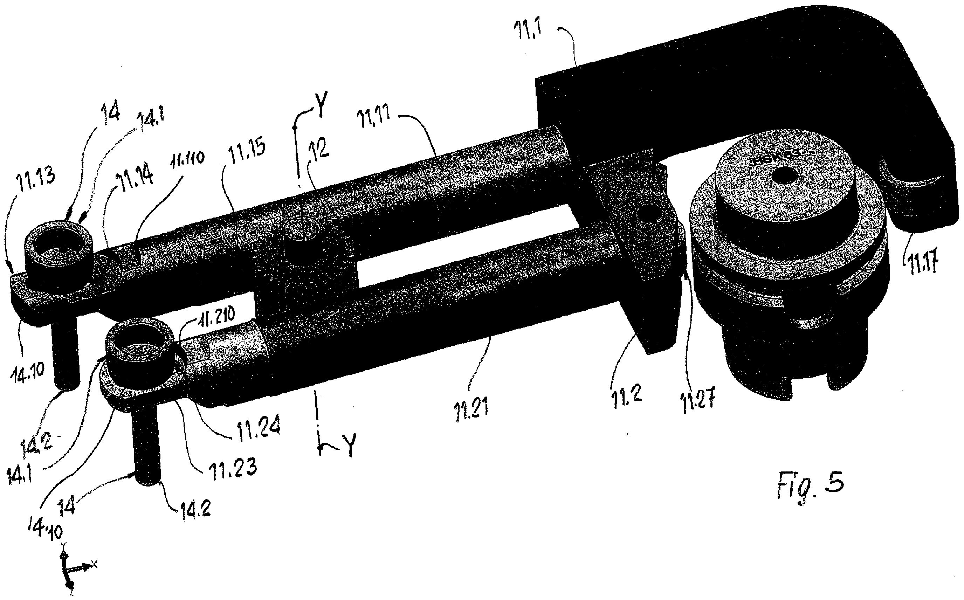

Furthermore, each jaw rod 11.11, 11.21 (fig. 5), around the respective slot-type hole 11.14, 11.24, has a surface portion 11.110, 11.210 that is conically countersunk towards said cup-type body 14.1 of the respective shutter 14 and, correspondingly, said cup-type body 14.1 of the respective shutter 14 has a lower outer edge 14.10 (which is near said slot-like hole) conically countersunk towards the top of the cup-type body and of a shape that is substantially complementary to that of said conically countersunk surface portion 11.110, 11.210 of said jaw rod 11.11, 11.21.

Therefore, in a condition wherein the shutter rod 14.2 is no longer in contact with the opposing surface of the head T (Fig. 7), the shutter spring 14.3 acts on said cup-type body 14.1 of the shutter 14 in contact with the respective jaw rod 11.1, 11.21 and in particular said lower outer edge 14.10 of the cup-type body 14.1, causing them to engage with said conically countersunk surface portion 11.110, 11.210 of the respective jaw rod 11.11, 11.21, thereby creating solid interference between the parts, which prevents axial movement or travel of the rod and therefore of the corresponding jaw 11.1, 11.2.

This condition occurs when the gripper 11 grips the tool-holder cone to be changed and keeps it stably gripped in the tool changing phase.

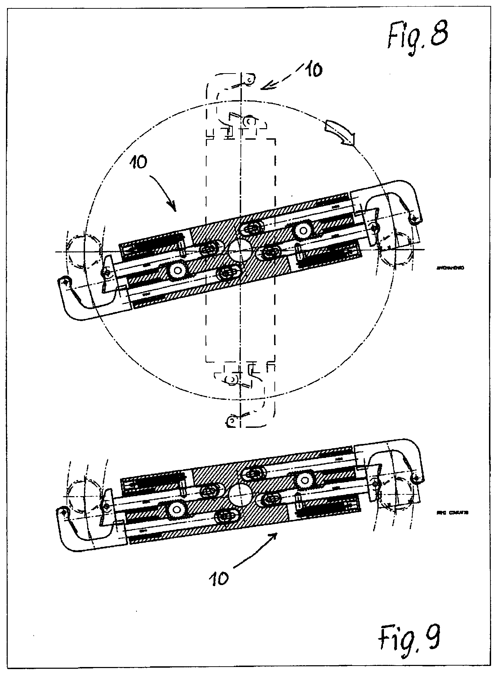

With reference to Figures 8 to 11, the operating sequence of the device according to the invention is explained briefly, in relation to a HSK63E type tool-holder cone:
- Fig. 8 shows, with dotted lines, the standby position, and with solid lines, a position in the proximity of the grippers 11 carried by the arm 10 with respect to two HSK63E type tool-holder cones;
- Fig. 9 shows the position of first contact of the grippers 11 carried by the arm 10 with respect to said two HSK63E type tool-holder cones;

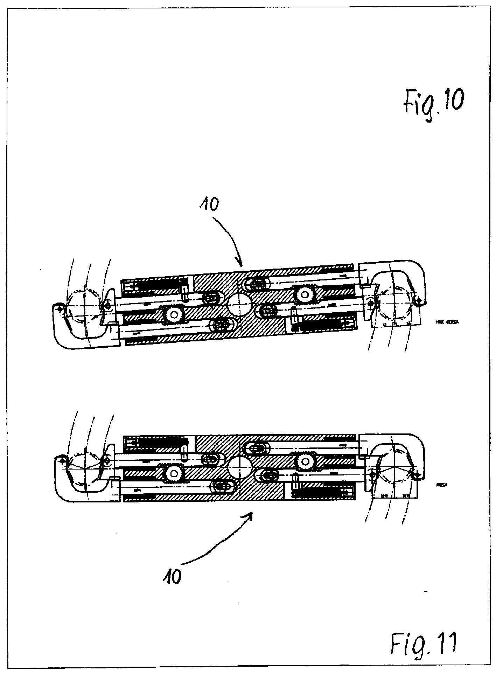

- Fig. 10 shows the maximum linear travel of the rods 11.11, 11.21 for mutual opening of the jaws 11.1, 11.2 of each gripper 11, with respect to said two HSK63E type tool-holder cones;
- Fig. 11 shows the gripping of said two HSK63E type tool-holder cones by the grippers 11. In this condition, there follow the operations (not shown) of: extracting the tool-holders from the brackets (linear output movement); changing the position of the tools (rotation of arm thru +180°), during which operations the grippers 11 are solidly prevented from moving and stably grip the respective tool-holder cone, since the respective shutter 14 is in the position shown in detail in Fig. 7.

There follows the operation of inserting the exchanged tool-holders in the brackets (linear return movement), during which the grippers 11 are not prevented from moving and release the respective tool-holder, since the respective shutter 14 is in the position shown in detail in Fig. 6.

The cycle ends with the release of the tool-holders (rotation of arm thru -90°).

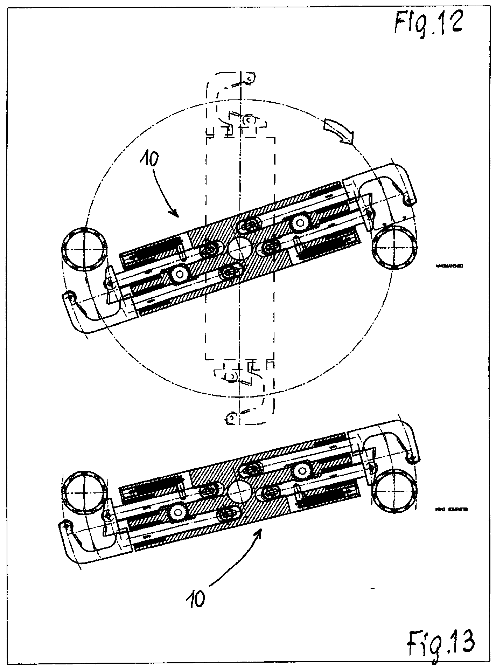

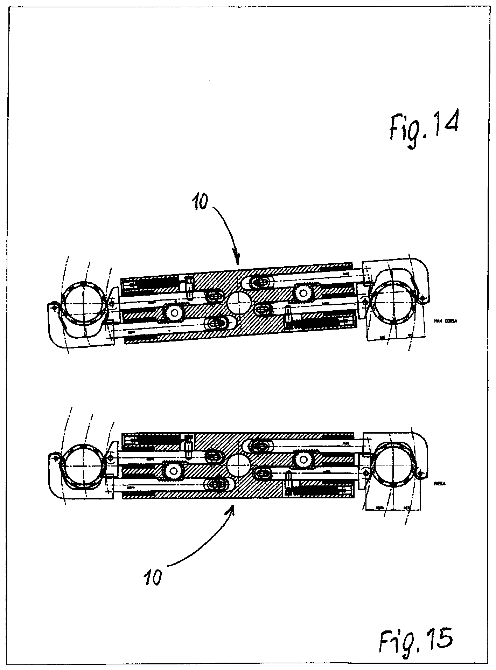

A similar cycle, shown in Figures 12 to 15, is performed by the device according to the invention in relation to a pair of HSK80E type tool-holder cones. A description thereof has been omitted.

As can be seen from the previous description, the tool changer device according to the invention makes it possible to adapt first of all the opening and then the symmetrical closure of the gripper, according to the diameter of the tool-holder cone to be changed, by means of a simple mechanism, since opening and closing of the gripper are synchronized.

Blocking of the tool-holder cone is made irreversible as soon as the device extracts the cones from their seats.

The device according to the invention is necessarily used with a cam exchanger, whose rules of movement are specifically designed to prevent damage to the tool-holder cone when the gripper engages the cylindrical part and grips the tool-holder.

## Claims

1. Tool changer device (D), comprising a stationary head (T), wherein is provided a cam exchanger mechanism (S), that transforms uniform rotary input movement, provided by a gear motor unit (M), into an ordered series of intermittent linear and rotary movements of an output shaft (A), having an axis (X-X) and on which is mounted an arm (10) carrying at least one tool gripper (11), and wherein said gripper (11) comprises an outer jaw (11.1) and an inner jaw (11.2), with reference to said axis (X-X), wherein
- said jaws (11.1, 11.2) can move with respect to one another with a straight-line movement, by means of respective rods (11.11, 11.21), guided (11.12, 11.22) in a box-type body (10.1) of said arm (10) and sliding along a plane at right angles to said axis (X-X),
- each of said rods (11.11, 11.12) has a respective free axial end (11.13, 11.23), near said axis (X-X), wherein there is provided a respective slot-type through hole (11.14, 11.24), the axes of which lie along a plane at right angles to said axis (X-X), the long axis being parallel to the direction of sliding of the respective rod,
- on opposing sides of their lateral surfaces, said rods (11.11, 11.21) have a respective rack (11.15, 11.25), which extends along a plane at right angles to said axis (X-X) and is engaged with a corresponding pinion (12) with an axis (Y-Y) parallel to said axis (X-X) of said shaft (A),
- an elastic means (13) directly acts on one (11.21) of said rods (11.11, 11.21) and causes the corresponding jaw (11.2) to close, approaching the other jaw (11.1), which in turn is indirectly acted on by said same elastic means (13), by means of its rod (11.11), the relative rack (11.15), said pinion (12) and the other rack (11.25), and caused to close and approach the afore-mentioned jaw (11.2), wherein
- corresponding with each of said slot-type holes (11.14, 11.24), there is provided a respective movable shutter (14), which projects partly on the outside of said box-type body (10.1), through a corresponding hole near said head (T),
- an elastic means (14.3) normally maintains said shutter (14) partially extended beyond the box-type body (10.1) and in contact with an opposing surface of said (T) and said shutter (14), in this condition, through the corresponding slot-type hole (11.14, 11.24) without interference,
wherein each rod (11.11, 11.21), around the respective slot-type hole (11.14, 11.24), has a surface portion (11.110, 11.210) that is conically countersunk towards a corresponding part (14.1) of the respective shutter (14) and, correspondingly, said corresponding part (14.1) of the respective shutter (14) has a portion (14.10) that is near said slot-type hole, conically countersunk and of a shape that is substantially complementary to that of said conically countersunk surface portion (11.110, 11.210) of said rod (11.11, 11.21),
and wherein, in a condition wherein said shutter (14) is no longer in contact with said opposing surface of the head (T), said elastic means (14.3) acts on said corresponding part (14.1) of the shutter (14) in contact with the respective rod (11.1, 11.21), and said portion (14.10) of the shutter (14) engages with said surface portion (11.110, 11.210) of the respective rod (11.11, 11.21), thereby creating solid interference between the parts, and preventing the movement of the rod and the corresponding jaw (11.1, 11.2).

2. Tool changer device (D) according to claim 1, **characterized in that** said box-type body (10.1) of said arm (10), at a respective distal end from the shaft (X-X), supports on the outside said jaws (11.1, 11.2) by means of respective cylindrical rods (11.11, 11.21), housed by axial sliding inside respective recirculating ball bearings (11.12, 11.22), fixed onto said box-type body (10.1), wherein the axes of said rods (11.11, 11.21) and the relative bearings are parallel to one another and lie on a plane at right angles to said axis (X-X).

3. Tool changer device (D) according to claim 1, **characterized in that** said shutter (14) comprises a cylindrical rod (14.2), with an axis (Z-Z) parallel to said axis (X-X) of the shaft (A) and positioned passing through the corresponding slot-type hole (11.14, 11.24), and a coaxial cup-type body (14.1), projecting beyond said slot-type hole in a distal position with respect to said head (T), **in that** said rod (14.2) of said shutter (14) partly protrudes outside the box-type body (10.1), through a corresponding hole provided on a side face of said body (10.1) near the head (T); **and in that** an elastic means (14.3) is elastically compressed between said cup-type body (14.1) and a cover (14.4) fixed in a side face of said box-type body (10.1) distal from said head (T), so that the elastic pre-loading of said elastic means normally maintains said rod (14.2) of the shutter (14) partially extended beyond the box-type body (10.1) and in contact with an opposing surface of said head (T).

4. Tool changer device (D) according to claims 1 and 3, **characterized in that** each rod (11.11, 11.21), around the respective slot-type hole (11.14, 11.24), has a surface portion (11.110, 11.210) that is conically countersunk towards said cup-type body (14.1) of the respective shutter (14) and, correspondingly, said cup-type body (14.1) of the respective shutter (14) has a lower outer edge (14.10) that is near said slot-type hole, conically countersunk towards the top of the cup-type body and of a shape that is substantially complementary to that of said conically countersunk surface portion (11.110, 11.210) of said rod (11.11, 11.21).

5. Tool changer device (D) according to one of the previous claims, **characterized in that** the length of travel of said rods (11.11, 11.12) corresponds at least to the linear difference measured between the diameters of the flanges of two tool-holder cones with flanges of different diameters, and that they are exchanged indifferently and "at random" by means of the device (D), **and in that** said length is substantially equal to that of the long axis of said slot-type holes (11.14, 11.24) on said rods (11.11, 11.21).

## Patentansprüche

1. Vorrichtung (D) für den Werkzeugwechsel, umfassend einen stationären Kopf (T), versehen mit einem Nockenaustauschermechanismus (S), der die von einer Getriebemotoreinheit (M) zugeführte gleichmäßige Drehbewegung in eine geordnete Reihe von intermittierenden Linear- und Drehbewegungen einer Abtriebswelle (A) umwandelt, die mit einer Achse (X-X) versehen ist, und an der ein Arm (10) mit mindestens einem Werkzeuggreifer (11) montiert ist, und in dem der besagte Greifer (11) eine Außenbacke (11.1) und eine Innenbacke (11.2) umfasst, mit Bezug auf besagte Achse (X-X),
**wobei**
- die besagten Backen (11.1, 11'.2) relativ untereinander mit geradliniger Bewegung durch entsprechende Stangen (11.11, 11.21) beweglich sind, die in einem kastenförmigen Körper (10.1) des besagten Arms (10) zum Gleiten in einer Ebene senkrecht zur besagten Achse (X-X) geführt (11.12, 11.22) werden,
- jede der besagten Stangen (11.11, 11.12) ein entsprechendes freies axiales Ende (11.13, 11.23) aufweist, das sich proximal zur besagten Achse (X-X) befindet, in dem sich ein dazugehöriges durchgehendes Langloch (11.14, 11.24) befindet, dessen Achsen in einer orthogonalen Ebene zu der besagten Achse (X-X) liegen, wobei die Hauptachse parallel zur Bewegungsrichtung der jeweiligen Stange verläuft,
- an gegenüberliegenden Teilen ihrer Seitenflächen die besagten Stangen (11.11, 11.21) jeweils eine Zahnstange (11.15, 11.25) aufweisen, die sich in einer Ebene orthogonal zur besagten Achse (X-X) erstreckt und mit einem entsprechenden Ritzel (12) mit einer Achse (Y-Y) parallel zur besagten Achse (X-X) der besagten Welle (A) verzahnt ist,
- ein elastisches Mittel (13) eine (11.21) der besagten Stangen (11.11, 11.21) und die entsprechende Backe (11.2) zum Schließen direkt betätigt und sich in Bezug auf die andere Backe (11.1) nähert, die wiederum indirekt betätigt wird durch das gleiche besagte elastische Mittel (13) über ihre Stange (11.11) der bezüglichen Zahnstange (11.15) des besagten Ritzels (12) und der anderen Zahnstange (11.25) und verursacht ein Schließen, indem sie sich in Bezug auf die besagte Backe (11.2) nähert,
**wobei**
- in Übereinstimmung mit jedem der besagten Langlöcher (11.14, 11.24) ein entsprechender beweglicher Verschluss (14) vorhanden ist, der sich teilweise nach außen zu dem besagten kastenförmigen Körper (10.1) durch ein entsprechendes Loch proximal zum besagten Kopf (T) erstreckt,
- ein elastisches Mittel (14.3) normalerweise den besagten Verschluss (14) teilweise über den kastenförmigen Körper (10.1) hinaus erstreckt und mit einer gegenüberliegenden Oberfläche des besagten Kopfes (T) in Kontakt hält und der besagte Verschluss (14) in diesem Zustand das entsprechende Langloch (11.14, 11.24) ohne Interferenz durchquert,
wobei jede Stange (11.11, 11.21) um sein Langloch (11.14, 11.24) herum einen Teil der Oberfläche (11.110, 11.210) aufweist, die konisch zu einem entsprechenden Teil (14.1) des dazugehörigen Verschlusses (14) ausgestellt ist, und entsprechend der besagte entsprechende Teil (14.1) des dazugehörigen Verschlusses (14) einen Abschnitt (14.10) aufweist, der in der Nähe des besagten Langlochs liegt, konisch ausgestellt ist und eine Form aufweist, die im Wesentlichen komplementär zu der des besagten konisch ausgestellten Oberflächenteils (11.110, 11.210) der besagten Stange (11.11, 11.21) ist,
**und wobei,** in einem Zustand, in dem der besagte Verschluss (14) nicht mehr mit der besagten gegenüberliegenden Oberfläche des Kopfes (T) in Kontakt ist, das besagte elastische Mittel (14.3) den besagten entsprechenden Teil (14.1) des Verschlusses (14) in Kontakt mit der jeweiligen Stange (11.1, 11.21) betätigt, und der besagte Abschnitt (14.10) des Verschlusses (14) den besagten Teil der Oberfläche (11.110, 11.210) der jeweiligen Stange (11.11, 11.21) in Anspruch nimmt, wodurch eine feste Interferenz zwischen den Teilen selbst realisiert wird und der Hub der Stange und der entsprechenden Backe (11.1, 11.2) verhindert wird.

2. Eine Vorrichtung (D) für den Werkzeugwechsel gemäß Anspruch 1, **dadurch gekennzeichnet, dass** der besagte kastenförmige Körper (10.1) des besagten Arms (10) an einem jeweiligen distalen Ende der Welle (X-X) die besagten Backen (11.1, 11.2) mittels entsprechender zylindrischer Stangen (11.11, 11.21) außen stützt, die zum axialen Gleiten in ihren jeweiligen Kugelumlauflagern (11.12, 11.22) untergebracht sind, die in demselben besagten kastenförmigen Körper (10.1) befestigt sind, in dem die Achsen der besagten Stangen (11.11, 11.21) und der entsprechenden Lager parallel zueinander sind und in einer Ebene orthogonal zu der besagten Achse (X-X) liegen.

3. Eine Vorrichtung (D) für den Werkzeugwechsel gemäß Anspruch 1, **dadurch gekennzeichnet, dass** der besagte Verschluss (14) eine zylindrische Stange (14.2) mit einer Achse (Z-Z) parallel zur besagten Achse (X-X) der Welle (A) aufweist und durch das entsprechende Langloch (11.14, 11.24) hindurchgeführt ist, sowie einen koaxialen becherförmigen Körper (14.1), der über das besagte Langloch hinaus in einer distalen Position in Bezug auf den besagten Kopf (T) herausragt, **dadurch dass** sich die besagte Stange (14.2) des besagten Verschlusses (14) teilweise außerhalb des kastenförmigen Körpers (10.1) durch ein entsprechendes Loch, das in einer Seitenfläche des besagten Körpers (10.1) proximal zum Kopf (T) vorgesehen ist, erstreckt; **und dadurch dass** ein elastisches Mittel (14.3) zwischen dem besagten becherförmigen Körper (14.1) und einer Abdeckung (14.4), die in einer Seitenfläche des besagten kastenförmigen Körper (10.1) distal vom besagten Kopf (T) befestigt ist, elastisch komprimiert ist, so dass die elastische Vorspannung des besagten elastischen Mittels die besagte Stange (14.2) des Verschlusses (14) normalerweise teilweise über den kastenförmigen Körper (10.1) hinaus und in Kontakt mit einer gegenüberliegenden Oberfläche des besagten Kopfes (T) hält.

4. Eine Vorrichtung (D) für den Werkzeugwechsel gemäß Anspruch 1 und 3, **dadurch gekennzeichnet, dass** jede Stange (11.11, 11.21) um das jeweilige Langloch (11.14, 11.24) herum ein Oberflächenteil (11.110, 11.210) aufweist, das konisch zum besagten becherförmigen Körper (14.1) des jeweiligen Verschlusses (14) ausgestellt ist, und entsprechend der besagte becherförmige Körper (14.1) des jeweiligen Verschlusses (14) die untere Außenkante (14.10), die proximal zum besagten Langloch liegt, konisch zur Oberseite des becherförmigen Körpers hin ausgestellt ist und eine Form aufweist, die im Wesentlichen komplementär zu der des besagten konisch ausgestellten Oberflächenteils (11.110, 11.210) der besagten Stange (11.11, 11.21) ist.

5. Eine Vorrichtung (D) für den Werkzeugwechsel gemäß einem jeden der vorhergehenden Ansprüche, **dadurch gekennzeichnet, dass** die Hublänge der besagten Stangen (11.11, 11.12) mindestens der linearen Messdifferenz zwischen den Durchmessern der Flansche zweier Werkzeugkegel mit Flanschen unterschiedlichen Durchmessers entspricht, die zufällig und gleichförmig durch die Vorrichtung (D) ausgetauscht werden, **und dadurch gekennzeichnet, dass** die besagte Länge im Wesentlichen gleich der Hauptachse der besagten Langlöcher (11.14, 11.24) der besagten Stangen (11.11, 11.21) ist.

## Revendications

1. Dispositif de changement d'outil (D) comprenant une tête (T) fixe dans laquelle est prévu un mécanisme changeur à came (S) qui transforme le mouvement de rotation uniforme en entrée, fourni par un groupe motoréducteur (M), en une série ordonnée de mouvements intermittents, linéaires et rotatifs d'un arbre de sortie (A) ayant un axe (X-X) et sur lequel est monté un bras (10) portant au moins une pince (11) de préhension d'outils, et où ladite pince (11) comprend une mâchoire extérieure (11.1) et une mâchoire intérieure (11.2), par rapport audit axe (X-X),
où
- lesdites mâchoires (11.1, 11.2) sont relativement mobiles entre elles avec un mouvement rectiligne, au moyen de tiges respectives (11.11, 11.21), guidées (11.12, 11.22) dans un corps en forme de boîte (10.1) dudit bras (10) par coulissement sur un plan orthogonal par rapport audit axe (X-X),
- chacune desdites tiges (11.11, 11.12) possède une extrémité axiale respective libre (11.13, 11.23), proche dudit axe (X-X), où est prévu un trou passant respectif à fente (11.14, 11.24), où les axes reposent sur un plan orthogonal audit axe (X-X), l'axe principal étant parallèle à la direction de coulissement de ladite tige,
- sur des parties opposées de leurs surfaces latérales, lesdites tiges (11.11, 11.21) ont une crémaillère respective (11.15, 11.25), qui s'étend sur un plan orthogonal audit axe (X-X) et est engrenée avec un pignon correspondant (12) avec axe (Y-Y) parallèle audit axe (X-X) dudit arbre (A),
- un moyen élastique (13) sollicite directement l'une (11.21) desdites tiges (11.11, 11.21) et la mâchoire correspondante (11.2) à se fermer, en se rapprochant de l'autre mâchoire (11.1), qui à son tour est indirectement sollicitée par ledit même moyen élastique (13), au moyen de sa tige (11.11), de la crémaillère correspondante (11.15), dudit pignon (12) et de l'autre crémaillère (11,25), à se fermer en s'approchant de ladite mâchoire (11.2),
où
- au niveau de chacun desdits trous à fente (11,14, 11.24), un obturateur mobile respectif (14) est prévu, qui s'étend partiellement vers l'extérieur dudit corps en forme de boîte (10.1), à travers un trou correspondant proche de ladite tête (T),
- un moyen élastique (14.3) maintient normalement ledit obturateur (14) partiellement étendu au-delà du corps en forme de boîte (10.1) et en contact avec une surface opposée de ladite tête (T) et ledit obturateur (14), dans cet état, passe à travers le trou à fente (11.14, 11.24) sans interférence,
où chaque tige (11.11, 11.21) possède, aux alentours du trou à fente respectif (11.14, 11.24), une partie de surface (11.110, 11.210) coniquement évasée vers une partie correspondante (14.1) de l'obturateur respectif (14) et, de façon correspondante, ladite partie correspondante (14.1) de l'obturateur respectif (14) possède une portion (14.10), qui est proche dudit trou à fente, coniquement évasée et de forme substantiellement complémentaire à celle de ladite partie de surface (11.110, 11.210) coniquement évasée de ladite tige (11.11, 11.21),
et où, dans un état dans lequel ledit obturateur (14) n'est plus en contact avec ladite surface opposée de la tête (T), ledit moyen élastique (14.3) sollicite ladite partie correspondante (14.1) de l'obturateur (14) en contact avec la tige respective (11.1, 11.21), et ladite portion (14.10) de l'obturateur (14) engage ladite partie de surface (11.110, 11.210) de la tige respective (11.11, 11.21), réalisant une interférence solide entre les parties elles-mêmes, empêchant la course de la tige et de la mâchoire correspondante (11.1, 11.2).

2. Dispositif (D) de changement d'outil selon la revendication 1, **caractérisé par le fait que** ledit corps en forme de boite (10.1) dudit bras (10) supporte à l'extérieur, à une extrémité respective éloignée de l'arbre (X-X), lesdites mâchoires (11.1, 11.2) au moyen de tiges cylindriques respectives (11.11, 11.21), logées par coulissement axial dans des roulements respectifs à recirculation de billes (11.12, 11.22), fixés dans ledit même corps en forme de boite (10.1), où les axes desdites tiges (11.11, 11.21) et des roulements relatifs sont parallèles entre eux et reposent sur un plan orthogonal par rapport audit axe (X-X).

3. Dispositif (D) de changement d'outil selon la revendication 1, **caractérisé par le fait que** ledit obturateur (14) comprend une tige cylindrique (14.2), ayant un axe (Z-Z) parallèle audit axe (X-X) de l'arbre (A) et disposé en traversant le trou à fente correspondant (11.14, 11.24), et un corps en forme de cuvette (14.1) coaxial, s'étendant au-delà dudit trou à fente en position éloignée par rapport à ladite tête (T), **par le fait que** ladite tige (14.2) dudit obturateur (14) s'étend en partie à l'extérieur du corps en forme de boite (10.1), à travers un trou correspondant prévu dans une face latérale dudit corps (10.1) à proximité de la tête (T); **et par le fait qu'**un moyen élastique (14.3) est comprimé élastiquement entre ledit corps en cuvette (14.1) et un couvercle (14.4) fixé dans une face latérale dudit corps en forme de boite (10.1) éloigné de ladite tête (T), de sorte que la pré-charge élastique dudit moyen élastique maintient normalement ladite tige (14.2) de l'obturateur (14) partiellement étendue au-delà du corps en forme de boite (10.1) et en contact avec une surface opposée de ladite tête (T).

4. Dispositif (D) de changement d'outil selon la revendication 1 et 3, **caractérisé par le fait que** chaque tige (11.11, 11.21) possède, aux alentours du trou à fente respectif (11.14, 11.24), une partie de surface (11.110, 11.210) coniquement évasée vers ledit corps en cuvette (14.1) de l'obturateur respectif (14) et, de façon correspondante, ledit corps en cuvette (14.1) de l'obturateur respectif (14) possède le bord extérieur inférieur (14.10), qui est proche dudit trou à fente, coniquement évasé vers le sommet du corps en cuvette et de forme substantiellement complémentaire à celle de ladite partie de surface (11.110, 11.210) coniquement évasée de ladite tige (11.11, 11.21).

5. Dispositif (D) de changement d'outil selon l'une des revendications précédentes, **caractérisé par le fait que** la longueur de course desdites tiges (11.11, 11.12) correspond au moins à la différence de mesure linéaire entre les diamètres des brides de deux cônes porte-outils ayant des brides de différent diamètre et qui sont échangés de manière «random» et indifférente au moyen du dispositif (D), **et par le fait que** ladite longueur est substantiellement égale à celle de l'axe principal desdits trous à fente (11.14, 11.24) desdites tiges (11.11, 11.21).
